# EUROPEAN PATENT SPECIFICATION

(11) **EP 3 957 039 B1**
(45) Date of publication and mention of the grant of the patent: **09.10.2024**
(21) Application number: 19720207.0
(22) Date of filing: 16.04.2019
(51) Int. Cl.: H04L 9/40

(54) **LAWFUL INTERCEPTION IN RCS**
RECHTMÄSSIGES ABFANGEN IN RCS
INTERCEPTION LÉGALE EN RCS

(43) Date of publication of application: 23.02.2022
(73) Proprietor: TELEFONAKTIEBOLAGET LM ERICSSON (PUBL), 164 83 Stockholm (SE)
(72) Inventor: MARFIA, Francesca, 84016 Pagani (Salerno) (IT); MARINO, Abramo, 80023 Caivano (IT); LUISI, Antonio, 84081 Baronissi (SA) (IT); SANTELLA, Chiara, 84014 Nocera Inferiore (IT); CUNIATO, Vincenzo, 80011 Acerra (Na) (IT); ORABONA, Luciano, 81100 CASERTA (IT)
(74) Representative: Ericsson
(86) International application number: PCT/SE2019/050350
(87) International publication number: WO 2020/214070

(56) References cited:
- WO-A1-2007/004938
- WO-A1-2018/038652

## Description

### TECHNICAL FIELD

Embodiments herein relate to methods of handling lawful interception (LI) in a rich communication services (RCS) context in a communication system, a corresponding computer system as well as computer programs and carriers of such computer programs.

### BACKGROUND

Rich Communication Suite (RCS) is a communication protocol between mobile telephone carriers and between phone and carrier. The global system for mobile communications (GSM) association (GSMA) controls the development of RCS and a desired goal of RCS is the replacement of short message service (SMS) messages with a text message system that is richer, a system that provides phonebook polling (for service discovery) as well as transmission of in-call multimedia such as audio, images and video sequences.

RCS messaging was launched in 2008, but full adoption has since then stalled and has yet to take off, but since Google has decided to adopt RCS as an alternative to the iMessage^{®} service provided by Apple^{®}, it promises to upgrade today's business about messaging and to rapidly grow. The main RCS services are message session relay protocol (MSRP) 1-1 chat, group chat and file transfer.

For RCS, the base network element is the Internet protocol multimedia subsystem (IMS) core system which enables peer-to-peer communication between RCS clients and uses session initiation protocol (SIP) and MSRP as protocols for signalling and media, respectively.

There are some SIP communications that do not require a session establishment (e.g, SMS over IMS), but most of the IMS/SIP based communication (e.g. voice over long term evolution (VoLTE), video, file transfer etc.) are taking place in sessions. For RCS the GSMA, has defined (in the official document RCC.07 - "Rich Communication Suite 8.0 Advanced Communications Services and Client Specification") two modes for delivering messages:
- "Session Mode Messaging", which requires the establishment of a SIP session and later an MSRP session for delivering message content, and
- the "Pager Mode Messaging" used for standalone messaging and that does not require the establishment of a SIP session.

Depending on the mode used in a service, specific SIP messages can be used (e.g. SIP INVITE is used in session mode messaging and the MESSAGE in pager mode messaging).

Instant messaging (IM) sessions (i.e. chat) require the "session-mode messaging" and the contents of the messages are carried using MSRP (see request for comments (RFC) 4975). To achieve this, a SIP session is established between the interested parties (sender and all receivers) with MSRP as the media component. All data communications during IM sessions should be transmitted using MSRP, regardless of the size of individual messages, but most communication terminals use the "early media" mode (as defined in RFC3960) to include the message content within the SIP signalling (e.g. SIP INVITE) before the MSRP session is established (see RFC 4975).

From an LI perspective, at present, there is no specific LI standard for the interception of RCS services and then this service is intercepted as a generic application within the IMS domain. The main referenced standards for LI interception in IMS domain are the technical specification 33.108 by the third generation partnership project (3GPP), the 232-5 specification by the European telecommunications standards institute (ETSI) and the alliance for telecommunications industry solutions (ATIS) specification 0700005.

The current LI standards used to intercept in the IMS domain do not take in consideration the current implementations of the RCS in the network and of communication terminals using the "early media" mode (RFC3960); in fact at present they require the delivering of intercepted signalling over the HI2 interface and intercepted traffic over the HI3 interface. The delivery of call content (CC) over HI2 is foreseen only in some special cases, e.g. SMS over IMS where the message content is carried inside the SIP signalling.

During test deployment of RCS it has been experienced that the "early media mode" is often used (e.g. in IM communications) and due to that the content of chats (usually exclusively handled as CC) is spread on both HI2 and HI3. In fact, it has been found that some message content intercepted within one and the same session is retrieved from the SIP messages (e.g. INVITE) and delivered to the law enforcement agency (LEA) via the HI2 interface, while some other message content is intercepted over the MSRP traffic and delivered to the LEA via the HI3 interface. In particular, a SIP message may carry the encapsulated message content of a chat (e.g. text, audio, emoji) in the final section of Message/CPIM body (see RFC 3862).

Example: Alice is inviting Bob to an IM session (session mode messaging) and the early media mode is used. The first SIP INVITE carries the text "hello Bob" inside the body of the message/common profile for instant messaging (CPIM) part. An example of how LI functionality reports the SIP INVITE to the LEA may be illustrated in the following table:

| **HI2 or HI3 interface** | **Reported intercept related information / content of communication (IRI/CC)** | |
|---|---|---|
| HI2 | CSeq: 1 INVITE | INVITE Bob (contains the string "hello Bob") |
| HI2 | CSeq: 1 INVITE | SIP/2.0 100 Trying |
| HI2 | CSeq: 1 INVITE | SIP/2.0 100 Ringing |
| HI2 | CSeq: 1 INVITE | SIP/2.0 200 OK |
| HI2 | CSeq: 1 ACK | ACK |
| HI3 | MSRP content | |
| HI2 | CSeq: 2 BYE | BYE |
| HI2 | CSeq: 2 BYE | SIP/2.0 200 OK |

That is, as exemplified in the table, all the SIP messages (including the SIP INVITE message containing text "hello Bob") exchanged between endpoints during the IM channel negotiation are delivered over the HI2 interface and the contents of the MSRP session established after the SIP session is up is delivered over the HI3 interface.

This behaviour produces a big processing effort for the LEA because the LEA has to correlate and assemble the whole call content by getting part of it via the HI2 and the other part via the HI3 despite the fact that the contents received via the HI2 and the HI3 interfaces belong to the same session. Consequently, service providers will complain about the great complexity of the work needed in order to provide evidence of what has been delivered to the LEA, also because statistics reporting associated with distinct counters for HI2 (that should carry IRI only) and HI3 (that should carry CC only) are no longer valid since part of CC is delivered over HI2. WO 2018/038652 discloses the use of lawful interception in for instance IMS when packets contain a mix of signaling and content. It does however not disclose the use of MF2/DF2 to determine that intercepted messages comprise early media content associated with RSC traffic.

### SUMMARY

In view of the above, an object of the present disclosure is to overcome drawbacks related to lawful interception in an RCS context.

This object is achieved in a first aspect by a method performed by a LI mediation system in a communication system, the mediation system comprising a mediation and delivery function for intercept related information (MF2/DF2) and a mediation and delivery function for call content (MF3/DF3). The method comprises receiving, by the MF2/DF2 from an intercept access point (IAP) in an RCS network element (NE), an intercepted message. The MF2/DF2 determines that the intercepted message comprises SIP early media content associated with RCS traffic, and as a consequence:
- the MF2/DF2 transmits the intercepted message to a LEA via an HI2 interface,
- the MF2/DF2 transmits the SIP early media content to the MF3/DF3, and
- the MF3/DF3 transmits the SIP early media content to the LEA via an HI3 interface.

That is, such a method identifies the early media content in RCS traffic and provides the whole CC on the HI3 interface to the LEA. This is advantageous at least in that it enables the LEA to use fewer resources for collating the intercepted content of an RCS session. This advantage is further accentuated when considering various embodiments that involve identifying the "early media mode" in an RCS service, extracting the message content from the intercepted SIP messages carrying it and building an "artificial" MSRP packet and send it to the LEA over the HI3 interface. The artificial MSRP packet may be identifiable by a new flag put in the HI3 header and named, e.g.,

*ContentExtractedFromSipMessage.* The original SIP message carrying the content of communication is still sent to the LEA but it may be marked with a new flag, e.g., *ContentDuplicated-onHI3*, to inform the LEA that a copy of it has been also delivered over HI3. In this way the LEA receives all the CC over the HI3 interface and the LEA is informed that there may be an "artificial" HI3 packet by checking the new "optional" flags introduced over HI2 and HI3. In this way the LEA may discard the message content received over HI2 and instead obtaining the whole content of the RCS session via the HI3 interface only. The optionality of these flags will allow the LEA to interwork with LI mediation systems that do not implement the method as disclosed herein and thereby assuring backward compatibility. In other words, various embodiments may be summarized as follows:
The determination by the MF2/DF2 that the intercepted message comprises SIP early media content associated with RCS traffic may comprise determining that the intercepted message is a SIP INVITE message, determining that the SIP INVITE message comprises session description protocol (SDP) data, determining that the SDP data comprises a MSRP media description and determining that a content type of the SIP INVITE message is CPIM.

Some embodiments comprises storing, by the MF2/DF2, as a consequence of the determination that the intercepted message comprises SIP early media content associated with RCS traffic, the SIP early media content having the CPIM content type and at least part of the SDP data.

Various embodiments comprise:
- receiving, by the MF2/DF2 from the IAP, an intercepted SIP 200 OK message,
- determining, by the MF2/DF2, that a session identity of the intercepted SIP 200 OK message is equal to a session identity of the SIP INVITE message, and as a consequence performing:
- transmitting the intercepted SIP 200 OK message by the MF2/DF2 via the HI2 interface to the LEA,
- obtaining, by the MF2/DF2, the stored SIP early media content having the CPIM content type and said at least part of the SDP data, and
- transmitting the SIP early media content from the MF2/DF2 to the MF3/DF3, said transmission including said at least part of the SDP data.

In some embodiments, the transmission of the intercepted SIP INVITE message by the MF2/DF2 via the HI2 interface to the LEA may comprise transmission of information that specifies that content of the intercepted message is provided to the LEA also via the HI3 interface from the MF3/DF3.

In various embodiments, the MF3/DF3 performs:
- reception from the MF2/DF2 of the SIP early media content,
- creation of an MSRP packet comprising the received SIP early media content,
- creation of an HI3 packet comprising the created MSRP packet, and wherein:
- transmission of the SIP early media content by the MF3/DF3 to the LEA comprises transmission of the created HI3 packet.

In various embodiments, the creation of the MSRP packet may comprise inclusion of early media content obtained from stored CPIM content. In such embodiments the creation of the MSRP packet may comprise inclusion of any of the SDP media descriptions m, c and a, as well as inclusion of a session identity.

In various embodiments, the HI3 packet may comprise information that specifies that the SIP early media content originates in a SIP message, and in various embodiments the HI3 packet may comprise information that specifies that the MSRP packet is created by the MF3/DF3.

In a further aspect there is provided a computer system of a communication system. The computer system is configured to communicate with a LEA and an IAP and comprises an MF2/DF2 and an MF3/DF3. The computer system comprises a plurality of server blades, each server blade comprising a processor and a memory. The memory contains instructions executable by the processor whereby the computer system is operative to perform a method according to the first aspect.

In yet a further aspect there are provided a computer program comprising instructions which, when executed on at least one processor in a server blade in a computer system of a communication system, wherein the computer system is configured to communicate with a LEA and an IAP and comprises an MF2/DF2 and an MF3/DF3, cause the computer system to carry out a method according to the first aspect. In yet a further aspect there is provided a carrier comprising such a computer program, wherein the carrier is one of an electronic signal, an optical signal, a radio signal and a computer readable storage medium.

These further aspects and embodiments of these further aspects provide the same effects and advantages as summarized above in connection with the method of the first aspect.

### BRIEF DESCRIPTION OF THE DRAWINGS

Figures 1a and 1b are schematically illustrated block diagrams of communication systems,
figures 2a-c are flowcharts of methods,
figure 3 is a signaling diagram,
figure 4 schematically illustrates a computer system, and
figure 5 schematically illustrates a computer system.

### DETAILED DESCRIPTION

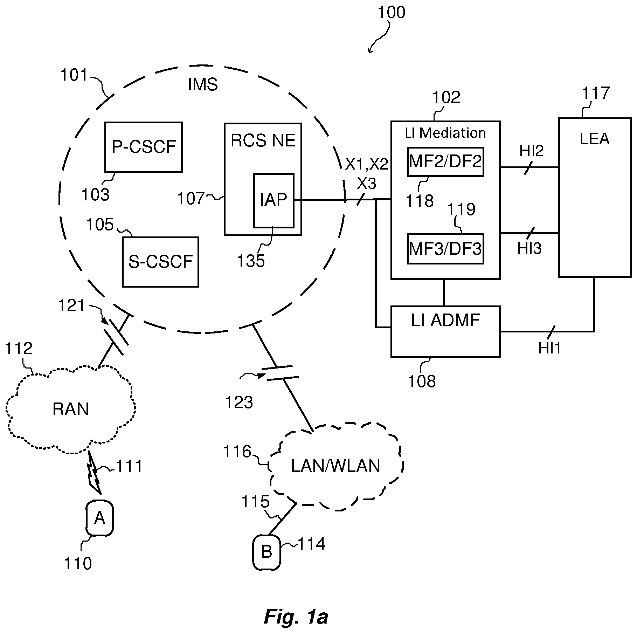

**Figure 1a** schematically illustrates a first functional representation of a communication system 100 comprising an IMS 101 and entities involved in lawful interception as summarized above. In some more detail, the IMS 101 is connected to two access networks: a radio access network (RAN) 112, e.g. any 3GPP RAN, and a local area network (LAN) that may include a wireless LAN 116 that operates according to, e.g. an institute of electrical and electronics engineers (IEEE) 802.11 standard. The access networks 112, 116 are connected to the IMS 100 via interface functionality 121, 123 in appropriate gateway nodes that are not illustrated in figure 1a. A first communication unit 110 is connected via an air interface 111 to the RAN 112 and a second communication unit 114 is connected to the LAN 116 via an appropriate connection interface 115.

An LI mediation system 102, connected to the IMS 101, comprises lawful interception mediation functionality in the form of an MF2/DF2 for intercept related information and an MF3/DF3 for call content that communicate with a LEA 117 for performing lawful interception of RCS traffic (as well as, e.g., telephone calls and other types of media sessions) involving, e.g., the communication units 110 and 114. The IMS 101 comprises at least one RCS network element (NE) 107 that provides appropriate RCS functionality to the communication units 110, 114. In order to enable lawful interception of RCS (and other) traffic, the RCS NE 107 comprises an intercept access point (IAP) 135 that is configured to communicate with the LI mediation system 102. An LI administrative function (ADMF) 108 is configured to communicate with the LEA 117 and the IAP 135.

Signalling between the entities in the IMS 101 and the connected entities takes place by means of SIP signalling and associated SDP data. The IAP 135 in the RCS NE 107 in the IMS 101 interfaces with the mediation system 102 via an X2 interface and via an X3 interface, and the mediation function 102 interfaces with the LEA 117 via an HI2 interface and via an HI3 interface. The ADMF 108 interfaces with the IAP 135 via an X1 interface and interfaces with the LEA 117 via an HI1 interface.

As the skilled person realizes, the IMS 101 typically comprises a plurality of functional entities such as a proxy call/session control functions (P-CSCF) 103 and a serving call/session control function (S-CSCF) 105 etc. that may interact within the IMS 101 as well as interact with the mediation function 102, the RAN 112 and the LAN 116. Detailed description of how these functional entities 103, 105 operate, and interface functionality indicated by reference numerals 121 and 123 are outside the scope of the present disclosure.

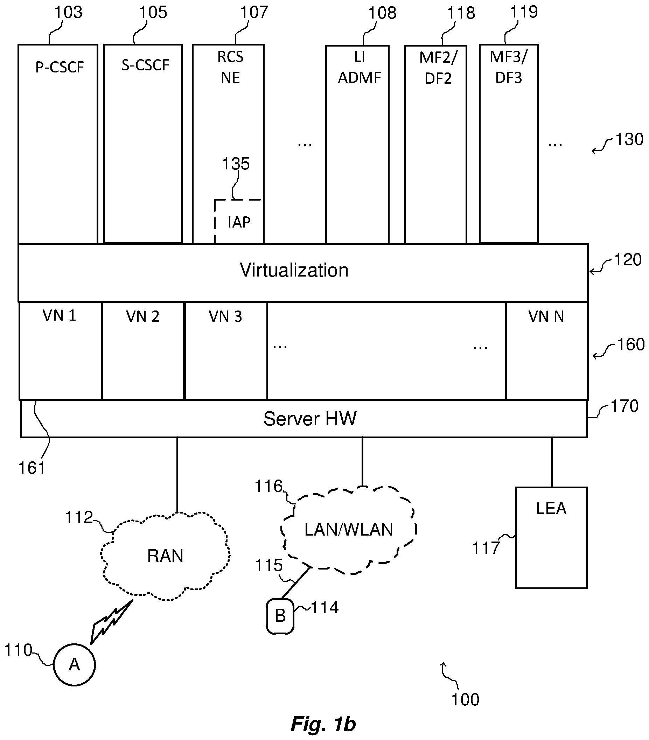

Typical implementations of an IMS and the connected functional entities, including the mediation system 102, may in various embodiments realize the entities in a larger and more general processing system, e.g. in the form of one or more computer servers (e.g. a so-called cloud implementation) having functional blocks that operate to realize functionality of the IMS 101 as well as the mediation system 102. Figure 1b schematically illustrates such a cloud implemented functional representation of the communication system 100. In this functional representation, the communication system 100 is realized at least in part by virtualized functions that are executed on virtual nodes 161 that utilize a hardware server platform 170.

The P-CSCF 103, the S-CSCF 105, the RCS NE 107 with the included IAP 135, the ADMF 108, the MF2/DF2 118 and the MF3/DF3 119 are realized in a functional layer 130 of virtualized network functions (VNF) that execute in the virtual nodes 110 via a virtualization layer 120. The communication units 110, 114 are connected to the hardware platform 170 via the RAN 112 and the LAN 116, respectively. The LEA 117 is connected to the hardware platform 170, the details of which are outside the scope of the present disclosure.

The RCS NE 107 with the included IAP 135, the ADMF 108, the MF2/DF2 118 and the MF3/DF3 119, as well as the LEA 117 all comprise processing and storage resources that are configured to realize and handle LI in a RCS context as will be exemplified in detail below. That is, communication units in the communication system 100 such as the communication units 110 and 114 may be a target of lawful interception when operating in an RCS context, as requested by the LEA 117. In such cases, the ADMF 108, having received the request for LI from the LEA 117, sends an interception order for the requested target to the IAP 135 in the RCS NE 107, whereupon LI of RCS traffic takes place as will be discussed further below.

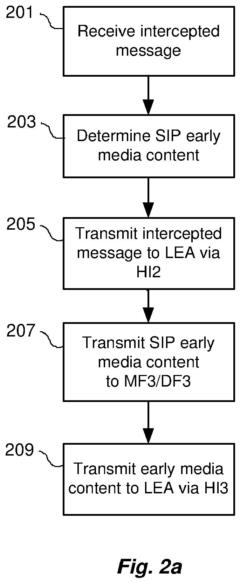

Turning now to **figures 2a****-c,** and with continued reference to figures 1a and 1b, embodiments of methods related to LI in a RCS context will be described in detail. The embodiments comprise a number of actions performed by the LI mediation system 102 comprising the MF2/DF2 118 and the MF3/DF3 119 introduced and described above in connection with figure 1a and figure 1b:

### Action 201

The MF2/DF2 118 receives, from the IAP 135 in the RCS NE 107, an intercepted message.

As will be schematically illustrated below, the IAP 135 has been ordered by the ADMF 108 to perform LI of RCS traffic and provides the intercepted messages to the MF2/DF2, the details of which is outside the scope of the present disclosure.

### Action 203

The MF2/DF2 118 determines that the intercepted message comprises SIP early media content associated with RCS traffic, and as a consequence performs the following actions:

### Action 205

The MF2/DF2 118 transmits, via the HI2 interface to the LEA 117, the intercepted message.

The transmission of the intercepted message by the MF2/DF2 118 via the HI2 interface to the LEA 117 may comprise transmission of information that specifies that content of the intercepted message is provided to the LEA 117 also via the HI3 interface from the MF3/DF3 119.

### Action 207

The MF2/DF2 118 transmits the SIP early media content to the MF3/DF3 119.

### Action 209

The MF3/DF3 119 transmits, via the HI3 interface to the LEA 117, the SIP early media content.

The determination in action 203 by the MF2/DF2 118 that the intercepted message comprises SIP early media content associated with RCS traffic may comprise:

### Action 221

Determining that the intercepted message is a SIP INVITE message.

### Action 223

Determining that the SIP INVITE message comprises SDP data.

### Action 225

Determining that the SDP data comprises an MSRP media description.

### Action 227

Determining that a content type of the SIP INVITE message is CPIM.

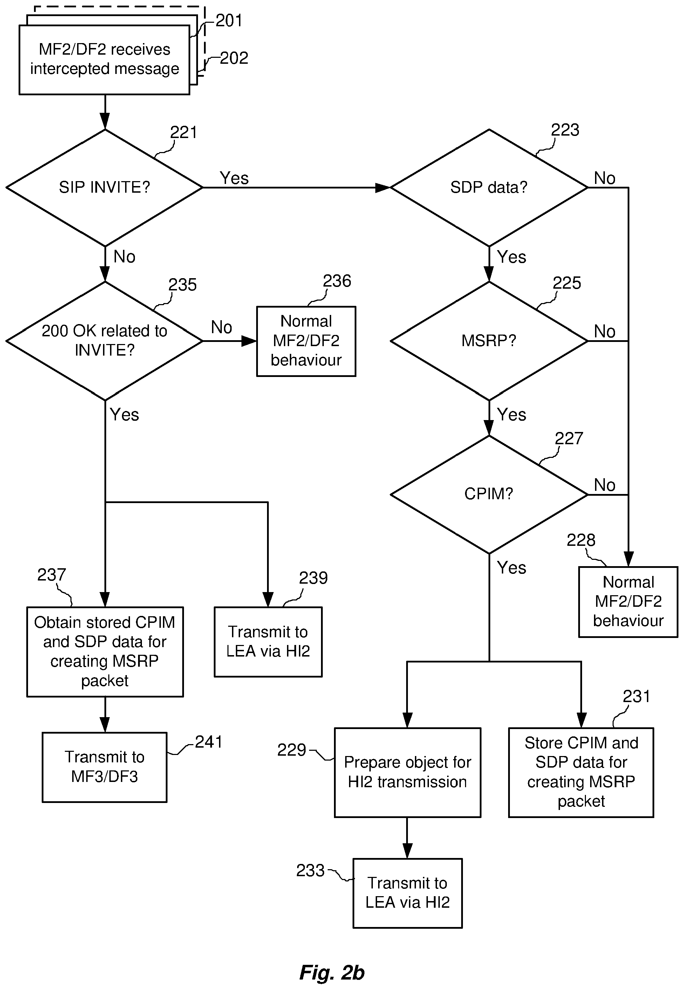

As indicated in figure 2b, if any of the determinations 223, 225, 227 is negative, then the MF2/DF2 continues with normal operations. For example, formatting and delivering the received message to the LEA 117 according to the LI standard, the details of which is outside the scope of the present disclosure.

As a consequence of the determination that the intercepted SIP INVITE message comprises SIP early media content associated with RCS traffic, the MF2/DF2 118 may in various embodiments perform:

### Action 229

Preparing an object that comprises the intercepted SIP INVITE message. The object may comprise information that specifies that content of the intercepted SIP INVITE message is provided to the LEA 117 also via the HI3 interface from the MF3/DF3 119. For example, a parameter *"ContentDuplicated-onHI3=true"* may be included.

### Action 233

The object that was prepared as described in connection with action 229 is then transmitted to the LEA 117 via the HI2 interface.

### Action 231

Storing the SIP early media content having the CPIM content type and at least part of the SDP data. Any of the SDP media descriptions m, c and a of the SIP INVITE message as well as a session identity may be stored.

It is to be noted that it is assumed that the session identity is available and that any mechanism for calculating or obtaining the session identity are outside the scope of the present disclosure.

Having received and processed an SIP INVITE message as described above, further SIP messages may then be received and processed as follows:

### Action 202

The MF2/DF2 118 receives, from the IAP 135, an intercepted SIP 200 OK message.

### Action 235

Having determined, in action 221 that the message is not a SIP INVITE message, the MF2/DF2 118 determines that a session identity of the intercepted SIP 200 OK message is equal to a session identity of the intercepted SIP INVITE message, and as a consequence performs the following actions:

### Action 239

The MF2/DF2 118 transmits the intercepted SIP 200 OK message via the HI2 interface to the LEA 117.

### Action 237

The MF2/DF2 118 obtains the SIP early media content having the CPIM content type and said at least part of the SDP data that was stored by the MF2/DF2 118 in action 231. Any of the SDP media descriptions m, c and a of the SIP INVITE message as well as a session identity may be obtained.

### Action 241

The MF2/DF2 118 transmits the SIP early media content to the MF3/DF3 119, said transmission including said at least part of the SDP data.

For example, the transmission may be in the form of an object that comprises the information obtained as described in connection with action 237.

As indicated in figure 2b, if the determination 235 is negative, then the MF2/DF2 continues with normal operations. For example, formatting and delivering the received message to the LEA 117 according to the LI standard, the details of which is outside the scope of the present disclosure.

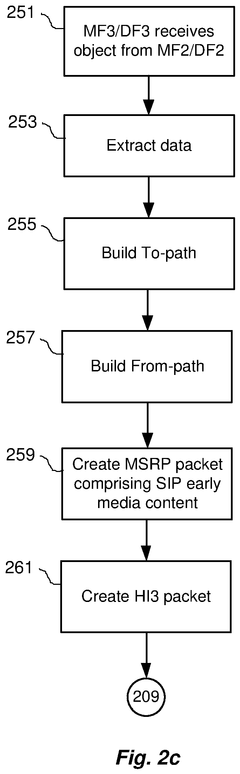

As illustrated in figure 2c, the MF3/DF3 119 may perform a number of actions:

### Action 251

The MF3/DF3 119 receives, from the MF2/DF2 118, an object that comprises the SIP early media content. The received object may comprise further data as will be exemplified below.

### Action 259

The MF3/DF3 119 creates an MSRP packet comprising the received SIP early media content. The MSRP packet may comprise further data such as SDP data obtained from the at least part of the SDP data that has been stored as described in connection with action 231. For example, the creation of the MSRP packet may comprise inclusion of any of the SDP media descriptions m, c and a and inclusion of a session identity.

### Action 261

The MF3/DF3 119 creates an HI3 packet comprising the created MSRP packet. The transmission in action 209 of the SIP early media content by the MF3/DF3 119 to the LEA 117 then comprises transmission of the created HI3 packet.

Various embodiments include those where the HI3 packet created as described in connection with action 261 comprises information that specifies that the SIP early media content originates in a SIP INVITE message. For example, a parameter *"ContentExtractedFromSipMessage=true"* may be included.

Various embodiments include those where the HI3 packet created as described in connection with action 261 comprises information that specifies that the MSRP packet is created by the MF3/DF3. In other words, such information conveys the fact that the HI3 packet is an "artificial" HI3 packet.

As figure 2c illustrates, in order to create the MSRP packet as described in connection with action 259, the MF3/DF3 119 may perform the following actions 253-257:

### Action 253

The MF3/DF3 119 extracts data from the object received from the MF2/DF2 118. The extracted data may comprise SDP media descriptions m, c and a of the intercepted SIP INVITE and the 200 OK messages as well as a session identity.

### Action 255

The MF3/DF3 119 then builds a to-path using the uniform resource identifier (URI) of the a line, if available, or a c and m line of the intercepted SIP 200 OK message received as described in connection with action 202. The to-path may then be included in the MSRP packet that is created as described in action 259.

### Action 257

The MF3/DF3 119 then builds a from-path using the MSRP URI of the a line, if available, or a c and m line of the intercepted SIP INVITE message received as described in connection with actions 201 and 221. The from-path may then be included in the MSRP packet that is created as described in action 259.

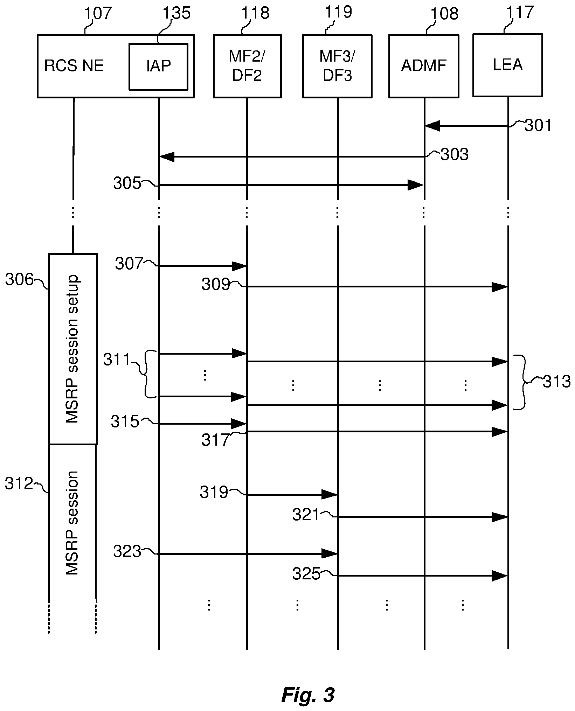

Turning now to **figure 3****,** and with continued reference to figures 1a-b and figures 2a-c, a LI scenario in a RCS context is illustrated in the form of a signalling diagram where a sequence (time increasing downwards) of message transmissions are illustrated as arrows.

The LI scenario commences by a transmission 301 from the LEA 117 to the ADMF 108. The transmission 301 comprises a warrant for LI of a specified target, for example the any of the communication units 110 and 114.

The ADMF 108 then communicates with the IAP 135 in the RCS NE107 by generating a transmission 303 comprising a target activation request and subsequently receiving from the IAP 135 a target activation response transmission 305 that comprises a confirmation that LI is activated for the specified target.

At some point in time, the specified target, e.g. the first communication unit 110, initiates a RCS chat with, e.g., the second communication unit 114. In order to initiate the RCS chat an MSRP session setup sequence 306 takes place during which SIP signalling takes place between the involved entities. Details regarding such signalling are outside the scope of the present disclosure.

Due to the fact that LI has been activated, the SIP messages that are transmitted during the MSRP session setup sequence 306 are intercepted by the IAP 135 and conveyed to the LEA 117 as illustrated. That is, an intercepted SIP INVITE message (comprising early media content as discussed above) is provided by the IAP 135 to the MF2/DF2 118 in a transmission 307 (corresponding to action 201 as described above), whereupon the MF2/DF2 118 conveys the SIP INVITE message to the LEA 117, including the parameter *"ContentDuplicated-onHI3=true",* in a transmission 309 (corresponding to action 233 as described above).

Subsequent intercepted SIP messages during the MSRP session setup sequence 306 include messages such as "100 trying", "180 Ringing" and "200 OK" (corresponding to action 202 as described above). These SIP messages are conveyed via the MF2/DF2 118 to the LEA 117 in the form of a plurality of transmissions 311 and 313, respectively, among which transmission of a "200 OK" message is denoted 315 and 317

As discussed above, once the MSRP session is setup, as confirmed by the "200 OK" message (as determined in actions 221 and 235 as described above), the MSRP session (i.e. the RCS chat) 312 commences.

The obtained (in action 237 as described above) SIP early media content having the CPIM content type and said at least part of the SDP data is provided by the MF2/DF2 118 to the MF3/DF3 119 in a transmission 319 (corresponding to action 241 as described above).

The object received by the MF3/DF3 119 from the MF2/DF2 118 in transmission 319 is then processed, e.g. as described above in connection with actions 253-261. The HI3 packet resulting from this processing by the MF3/DF3 119, comprising the early media content and further data such as the parameter *"ContentExtractedFromSipMessage=true"* , is then provided by the MF3/DF3 119 to the LEA 117 in a transmission 321 (corresponding to action 209 as described above).

The MSRP session 312 then continues and RCS traffic in the form of, e.g., media content intercepted by the IAP 135 is conveyed via the MF3/DF3 119 to the LEA 117 as exemplified by transmissions 323 and 325.

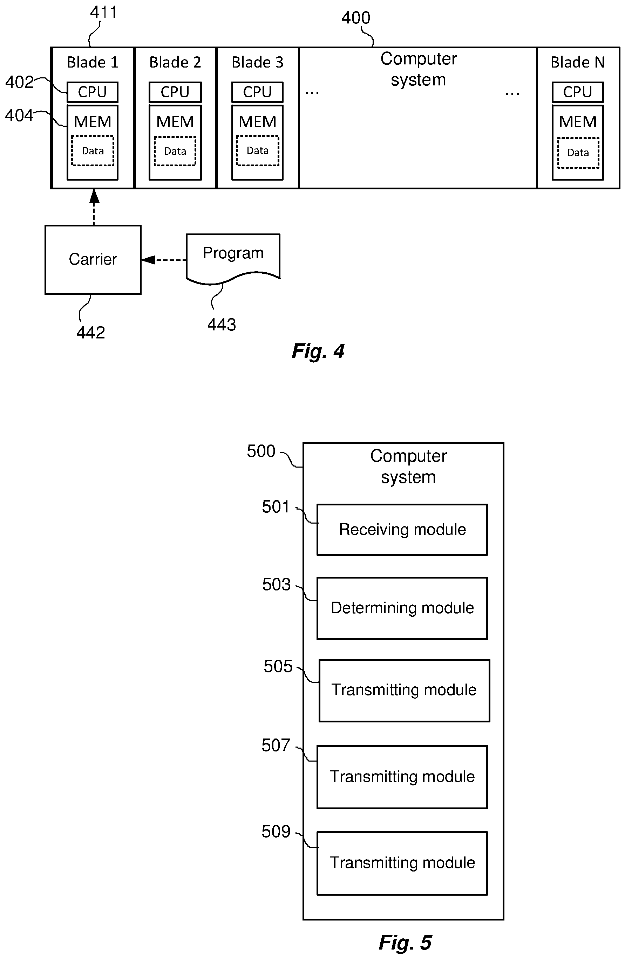

Turning now to **figure 4****,** and with continued reference to figures 1 to 3, a computer system 400 will be described in some more detail. The computer system 400, which may correspond to at least part of the communication system 100, comprises a plurality of server blades 411 that comprise a processor 402 and a memory 404. The memory 404 contains instructions executable by the processor 402 whereby the computer system 400 is operative, as an MF2DF2 and an MF3/DF3, to:
- receive, by the MF2/DF2 from an IAP in a RCS NE, an intercepted message,
- determine, by the MF2/DF2, that the intercepted message comprises SIP early media content associated with RCS traffic, and as a consequence:
- transmit, by the MF2/DF2 via an HI2 interface to an LEA, the intercepted message,
- transmit, by the MF2/DF2 to the MF3/DF3, the SIP early media content, and
- transmit, by the MF3/DF3 via an HI3 interface to the LEA, the SIP early media content.

The instructions that are executable by the processor 402 may be software in the form of a computer program 443. The computer program 443 may be contained in or by a carrier 442, which may provide the computer program 443 to the memory 404 and processor 402. The carrier 442 may be in any suitable form including an electronic signal, an optical signal, a radio signal or a computer readable storage medium.

In some embodiments, the computer system 400 is operative to:
- determine that the intercepted message is a SIP INVITE message,
- determine that the SIP INVITE message comprises session description protocol, SDP, data,
- determine that the SDP data comprises a message session relay protocol, MSRP, media description, and
- determine that a content type of the SIP INVITE message is common profile for instant messaging, CPIM.

In some embodiments, the computer system 400 is operative to:
- store, by the MF2/DF2, as a consequence of the determination that the intercepted message comprises SIP early media content associated with RCS traffic, the SIP early media content having the CPIM content type and at least part of the SDP data.

In some embodiments, the computer system 400 is operative to:
- receive, by the MF2/DF2 from the IAP, an intercepted SIP 200 OK message,
- determine, by the MF2/DF2, that a session identity of the intercepted SIP 200 OK message is equal to a session identity of the SIP INVITE message, and as a consequence:
- transmit the intercepted SIP 200 OK message by the MF2/MF2 via the HI2 interface to the LEA,
- obtain, by the MF2/DF2, the stored SIP early media content having the CPIM content type and said at least part of the SDP data, and
- transmit the SIP early media content from the MF2/DF2 to the MF3/DF3, said transmission including said at least part of the SDP data.

In some embodiments, the computer system 400 is operative such that the transmission of the intercepted SIP INVITE message by the MF2/DF2 via the HI2 interface to the LEA comprises transmission of information that specifies that content of the intercepted message is provided to the LEA also via the HI3 interface from the MF3/DF3.

In some embodiments, the computer system 400 is operative to:
- receive, by the MF3/DF3 from the MF2/DF2, the SIP early media content,
- create, by the MF3/DF3, an MSRP packet comprising the received SIP early media content,
- create, by the MF3/DF3, an HI3 packet comprising the created MSRP packet, and wherein:
- the transmission of the SIP early media content by the MF3/DF3 to the LEA comprises transmission of the created HI3 packet.

In some embodiments, the computer system 400 is operative such that the creation of the MSRP packet comprises inclusion of early media content obtained from the stored (231) CPIM content.

In some embodiments, the computer system 400 is operative such that the creation of the MSRP packet comprises inclusion of any of the SDP media descriptions m, c and a and inclusion of a session identity.

In some embodiments, the computer system 400 is operative such that the HI3 packet comprises information that specifies that the SIP early media content originates in a SIP message.

In some embodiments, the computer system 400 is operative such that the HI3 packet comprises information that specifies that the MSRP packet is created by the MF3/DF3.

Turning now to **figure 5****,** and with continued reference to figures 1 to 4, a computer system 500 will be described in some more detail. The computer system 500 comprises:
- a receiving module 501 configured to receive, as an MF2/DF2 from an IAP in a RCS NE, an intercepted message,
- a determining module 503 configured to determine, as the MF2/DF2, that the intercepted message comprises SIP early media content associated with RCS traffic,
- a transmitting module 505 configured to transmit, as the MF2/DF2 via an HI2 interface to an LEA, the intercepted message,
- a transmitting module 507 configured to transmit, as the MF2/DF2 to the MF3/DF3, the SIP early media content, and
- a transmitting module 509 configured to transmit, as the MF3/DF3 via an HI3 interface to the LEA, the SIP early media content.

The computer system 500 may comprise further modules that are configured to perform in a similar manner as, e.g., the computer system 400 described above in connection with figure 4.

## Claims

1. A method performed by a lawful interception, LI, mediation system (102) comprising a mediation and delivery function for intercept related information, MF2/DF2 (118) and a mediation and delivery function for call content, MF3/DF3 (119), in a communication system (100), the method comprising:
- receiving (201, 307), by the MF2/DF2 (118) from an intercept access point, IAP, (135) in a rich communication suite, RCS, network element, NE, (107), an intercepted message,
- determining (203), by the MF2/DF2 (118), that the intercepted message comprises session initiation protocol, SIP, early media content associated with RCS traffic, and as a consequence:
- transmitting (205, 309), by the MF2/DF2 (118) via an HI2 interface to a law enforcement agency, LEA (117), the intercepted message,
- transmitting (207, 317), by the MF2/DF2 (118) to the MF3/DF3 (119), the SIP early media content, and
- transmitting (209, 319), by the MF3/DF3 (119) via an HI3 interface to the LEA (117), the SIP early media content.

2. The method of claim 1, wherein the determination (203) by the MF2/DF2 (118) that the intercepted message comprises SIP early media content associated with RCS traffic comprises:
- determining (221) that the intercepted message is a SIP INVITE message,
- determining (223) that the SIP INVITE message comprises session description protocol, SDP, data,
- determining (225) that the SDP data comprises a message session relay protocol, MSRP, media description, and
- determining (227) that a content type of the SIP INVITE message is common profile for instant messaging, CPIM.

3. The method of claim 2, comprising:
- storing (231), by the MF2/DF2 (118), as a consequence of the determination that the intercepted message comprises SIP early media content associated with RCS traffic, the SIP early media content having the CPIM content type and at least part of the SDP data.

4. The method of claim 3, comprising:
- receiving (202, 315), by the MF2/DF2 (118) from the IAP (135), an intercepted SIP 200 OK message,
- determining (235), by the MF2/DF2 (118), that a session identity of the intercepted SIP 200 OK message is equal to a session identity of the SIP INVITE message, and as a consequence performing:
- transmitting (239, 315) the intercepted SIP 200 OK message by the MF2/DF2 (118) via the HI2 interface to the LEA (117),
- obtaining (237), by the MF2/DF2 (118), the stored SIP early media content having the CPIM content type and said at least part of the SDP data, and
- transmitting (241, 317) the SIP early media content from the MF2/DF2 (118) to the MF3/DF3 (119), said transmission including said at least part of the SDP data.

5. The method of any of claims 1 to 4, wherein:
- the transmission (205, 233, 309) of the intercepted SIP INVITE message by the MF2/DF2 (118) via the HI2 interface to the LEA (117) comprises transmission of information that specifies that content of the intercepted message is provided to the LEA (117) also via the HI3 interface from the MF3/DF3 (119).

6. The method of any of claims 1 to 5, comprising:
- receiving (251, 319), by the MF3/DF3 (119) from the MF2/DF2 (118), the SIP early media content,
- creating (259), by the MF3/DF3 (119), an MSRP packet comprising the received SIP early media content,
- creating (261), by the MF3/DF3 (119), an HI3 packet comprising the created MSRP packet, and wherein:
- the transmission (209, 321) of the SIP early media content by the MF3/DF3 (119) to the LEA (117) comprises transmission of the created HI3 packet.

7. The method of claim 6, when depending on any of claims 3 to 5, wherein the creation (259) of the MSRP packet comprises inclusion of early media content obtained from the stored (231) CPIM content.

8. The method of claim 7, wherein the creation (259) of the MSRP packet comprises inclusion of any of the SDP media descriptions m, c and a and inclusion of a session identity.

9. The method of any of claims 6 to 8, wherein:
- the HI3 packet comprises information that specifies that the SIP early media content originates in a SIP message.

10. The method of claim 9, wherein:
- the HI3 packet comprises information that specifies that the MSRP packet is created by the MF3/DF3.

11. A computer system (400) of a communication system (100), the computer system (400) being configured to communicate with a Law Enforcement Agency (117) and an intercept access point and comprises a mediation and delivery function for intercept related information, MF2/DF2 (118), a mediation and delivery function for call content, MF3/DF3 (119), and a plurality of server blades (411), each server blade (411) comprising a processor (402) and a memory (404), said memory (404) containing instructions executable by said processor (402) whereby said computer system (400) is operative to perform a method according to any of claims 1 to 10.

12. A computer program (443) comprising instructions which, when executed on at least one processor (402) in a server blade (411) in a computer system (400) of a communication system (100), wherein the computer system (400) is configured to communicate with a Law Enforcement Agency (117) and an intercept access point and comprises a mediation and delivery function for intercept related information, MF2/DF2 (118), and a mediation and delivery function for call content, MF3/DF3 (119) , cause the computer system (400) to carry out the method according to any one of claims 1 to 10.

13. A carrier (442), comprising the computer program of claim 12, wherein the carrier is one of an electronic signal, an optical signal, a radio signal and a computer readable storage medium.

## Patentansprüche

1. Verfahren, das von einem Vermittlungssystem (102) für rechtmäßiges Abfangen, LI, das eine Vermittlungs- und Zustellfunktion für abfangbezogene Informationen, MF2/DF2, (118) und eine Vermittlungs- und Zustellfunktion für Rufinhalt, MF3/DF3, (119) umfasst, in einem Kommunikationssystem (100) durchgeführt wird, wobei das Verfahren umfasst:
- Empfangen (201, 307) einer abgefangenen Nachricht durch die MF2/DF2 (118) von einem Abfang-Zugangspunkt, IAP, (135) in einem Netzwerkelement, NE, (107) des Rich Communication Suite, RCS,
- Bestimmen (203), dass die abgefangene Nachricht Sitzungseinleitungsprotokoll-Early-Media-Inhalt, SIP-Early-Media-Inhalt, umfasst, der mit RCS-Verkehr assoziiert ist, durch die MF2/DF2 (118) und als Folge davon:
- Übertragen (205, 309) der abgefangenen Nachricht durch die MF2/DF2 (118) über eine HI2-Schnittstelle an eine Strafverfolgungsbehörde, LEA, (117),
- Übertragen (207, 317) des SIP-Early-Media-Inhalts durch die MF2/DF2 (118) an die MF3/DF3 (119) und
- Übertragen (209, 319) des SIP-Early-Media-Inhalts durch die MF3/DF3 (119) über eine HI3-Schnittstelle an die LEA (117).

2. Verfahren nach Anspruch 1, wobei die Bestimmung (203) durch die MF2/DF2 (118), dass die abgefangene Nachricht SIP-Early-Media-Inhalt umfasst, der mit RCS-Verkehr assoziiert ist, umfasst:
- Bestimmen (221), dass die abgefangene Nachricht eine SIP-INVITE-Nachricht ist,
- Bestimmen (223), dass die SIP-INVITE-Nachricht Sitzungsbeschreibungsprotokolldaten, SDP-Daten, umfasst,
- Bestimmen (225), dass die SDP-Daten eine Medienbeschreibung des Nachrichtensitzungsweiterleitungsprotokolls, MSRP, umfassen, und
- Bestimmen (227), dass ein Inhaltstyp der SIP-INVITE-Nachricht ein gemeinsames Profil für Sofortnachrichtenübermittlung, CPIM, ist.

3. Verfahren nach Anspruch 2, umfassend:
- Speichern (231) des SIP-Early-Media-Inhalts mit dem CPIM-Inhaltstyp und mindestens einem Teil der SDP-Daten durch die MF2/DF2 (118) als Folge der Bestimmung, dass die abgefangene Nachricht SIP-Early-Media-Inhalt umfasst, der mit RCS-Verkehr assoziiert ist.

4. Verfahren nach Anspruch 3, umfassend:
- Empfangen (202, 315) einer abgefangenen SIP-200-OK-Nachricht durch die MF2/DF2 (118) vom IAP (135),
- Bestimmen (235), dass eine Sitzungskennung der abgefangenen SIP-200-OK-Nachricht gleich wie eine Sitzungskennung der SIP-INVITE-Nachricht ist, durch die MF2/DF2 (118) und als Folge davon Durchführen von Folgendem:
- Übertragen (239, 315) der abgefangenen SIP-200-OK-Nachricht durch die MF2/DF2 (118) über die HI2-Schnittstelle an die LEA (117),
- Erhalten (237) des gespeicherten SIP-Early-Media-Inhalts mit dem CPIM-Inhaltstyp und des mindestens einen Teils der SDP-Daten durch die MF2/DF2 (118) und
- Übertragen (241, 317) des SIP-Early-Media-Inhalts von der MF2/DF2 (118) an die MF3/DF3 (119), wobei die Übertragung den mindestens einen Teil der SDP-Daten umfasst.

5. Verfahren nach einem der Ansprüche 1 bis 4, wobei:
- die Übertragung (205, 233, 309) der abgefangenen SIP-INVITE-Nachricht durch die MF2/DF2 (118) über die HI2-Schnittstelle an die LEA (117) auch eine Übertragung von Informationen, die angeben, dass Inhalt der abgefangenen Nachricht für die LEA (117) bereitgestellt wird, über die HI3-Schnittstelle von der MF3/DF3 (119) umfasst.

6. Verfahren nach einem der Ansprüche 1 bis 5, umfassend:
- Empfangen (251, 319) des SIP-Early-Media-Inhalts durch die MF3/DF3 (119) von der MF2/DF2 (118) und
- Erstellen (259) eines MSRP-Pakets durch die MF3/DF3 (119), das den empfangenen SIP-Early-Media-Inhalt umfasst,
- Erstellen (261) eines HI3-Pakets durch die MF3/DF3 (119), das das erstellte MSRP-Paket umfasst, und wobei:
- die Übertragung (209, 321) des SIP-Early-Media-Inhalts durch die MF3/DF3 (119) an die LEA (117) eine Übertragung des erstellten HI3-Pakets umfasst.

7. Verfahren nach Anspruch 6 bei Abhängigkeit von einem der Ansprüche 3 bis 5, wobei die Erstellung (259) des MSRP-Pakets die Einbeziehung von Early-Media-Inhalt umfasst, der aus dem gespeicherten (231) CPIM-Inhalt erhalten wird.

8. Verfahren nach Anspruch 7, wobei die Erstellung (259) des MSRP-Pakets die Einbeziehung jeder der SDP-Medienbeschreibungen m, c und a und die Einbeziehung einer Sitzungskennung umfasst.

9. Verfahren nach einem der Ansprüche 6 bis 8, wobei:
- das HI3-Paket Informationen umfasst, die angeben, dass der SIP-Early-Media-Inhalt aus einer SIP-Nachricht stammt.

10. Verfahren nach Anspruch 9, wobei:
- das HI3-Paket Informationen umfasst, die angeben, dass das MSRP-Paket von der MF3/DF3 erstellt wird.

11. Computersystem (400) eines Kommunikationssystems (100), wobei das Computersystem (400) so konfiguriert ist, dass es mit einer Strafverfolgungsbehörde (117) und einem Abfang-Zugangspunkt kommuniziert und eine Vermittlungs- und Zustellungsfunktion für abfangbezogene Informationen, MF2/DF2, (118), eine Vermittlungs- und Zustellungsfunktion für Rufinhalt, MF3/DF3, (119) und eine Mehrzahl von Serverblades (411) umfasst, wobei jedes Serverblade (411) einen Prozessor (402) und einen Speicher (404) umfasst, wobei der Speicher (404) Anweisungen enthält, die von dem Prozessor (402) ausgeführt werden können, wodurch das Computersystem (400) zum Durchführen eines Verfahrens nach einem der Ansprüche 1 bis 10 ausgelegt ist.

12. Computerprogramm (443), umfassend Anweisungen, die bei Ausführung auf mindestens einem Prozessor (402) in einem Serverblade (411) in einem Computersystem (400) eines Kommunikationssystems (100) das Computersystem (400) zum Durchführen des Verfahrens nach einem der Ansprüche 1 bis 10 veranlassen, wobei das Computersystem (400) so konfiguriert ist, dass es mit einer Strafverfolgungsbehörde (117) und einem Abfang-Zugangspunkt kommuniziert und eine Vermittlungs- und Zustellfunktion für abfangbezogene Informationen, MF2/DF2, (118) und eine Vermittlungs- und Zustellfunktion für Rufinhalt, MF3/DF3, (119) umfasst.

13. Datenträger (442), umfassend das Computerprogramm nach Anspruch 12, wobei der Datenträger eines von einem elektronischen Signal, einem optischen Signal, einem Funksignal und einem computerlesbaren Speichermedium ist.

## Revendications

1. Système réalisé par un système de médiation d'interception légale, LI, (102) comprenant une fonction de médiation et de livraison pour des informations liées à une interception, MF2/DF2 (118), et une fonction de médiation et de livraison pour un contenu d'appel, MF3/DF3 (119), dans un système de communication (100), le procédé comprenant :
- la réception (201, 307), par la MF2/DF2 (118) depuis un point d'accès d'interception, IAP, (135) dans un élément de réseau, NE, de suite de communication riche, RCS, (107), d'un message intercepté,
- la détermination (203), par la MF2/DF2 (118), que le message intercepté comprend un contenu multimédia précoce de protocole d'initiation de session, SIP, associé à un trafic RCS, et en conséquence :
- la transmission (205, 309), par la MF2/DF2 (118) via une interface HI2 à un organisme d'application de la loi, LEA (117), du message intercepté,
- la transmission (207, 317), par la MF2/DF2 (118) à la MF3/DF3 (119), du contenu multimédia précoce SIP, et
- la transmission (209, 319), par la MF3/DF3 (119) via une interface HI3 au LEA (117), du contenu multimédia précoce SIP.

2. Procédé selon la revendication 1, dans lequel la détermination (203), par la MF2/DF2 (118), que le message intercepté comprend un contenu multimédia précoce SIP associé à un trafic RCS comprend :
- la détermination (221) que le message intercepté est un message SIP INVITE,
- la détermination (223) que le message SIP INVITE comprend des données de protocole de description de session, SDP,
- la détermination (225) que les données SDP comprennent une description de support de protocole de relais de session de message, MSRP, et
- la détermination (227) qu'un type de contenu du message SIP INVITE est un profil commun de messagerie instantanée, CPIM.

3. Procédé selon la revendication 2, comprenant :
- le stockage (231), par la MF2/DF2 (118), en conséquence de la détermination que le message intercepté comprend un contenu multimédia précoce SIP associé à un trafic RCS, du contenu multimédia précoce SIP ayant le type de contenu CPIM et au moins une partie des données SDP.

4. Procédé selon la revendication 3, comprenant :
- la réception (202, 315), par la MF2/DF2 (118) depuis l'IAP (135), d'un message SIP 200 OK,
- la détermination (235), par la MF2/DF2 (118), qu'une identité de session du message SIP 200 OK intercepté est égale à une identité de session du message SIP INVITE, et en conséquence la réalisation de :
- la transmission (239, 315) du message SIP 200 OK intercepté par la MF2/DF2 (118) via l'interface HI2 au LEA (117),
- l'obtention (237), par la MF2/DF2 (118), du contenu multimédia précoce SIP stocké ayant le type de contenu CPIM et ladite au moins une partie des données SDP, et
- la transmission (241, 317) du contenu multimédia précoce SIP de la MF2/DF2 (118) à la MF3/DF3 (119), ladite transmission comprenant ladite au moins une partie des données SDP.

5. Procédé selon l'une quelconque des revendications 1 à 4, dans lequel :
- la transmission (205, 233, 309) du message SIP INVITE intercepté par la MF2/DF2 (118) via l'interface HI2 au LEA (117) comprend la transmission d'informations qui spécifient qu'un contenu du message intercepté est fourni au LEA (117) également via l'interface HI3 depuis la MF3/DF3 (119).

6. Procédé selon l'une quelconque des revendications 1 à 5, comprenant :
- la réception (251, 319), par la MF3/DF3 (119) depuis la MF2/DF2 (118), du contenu multimédia précoce SIP,
- la création (259), par la MF3/DF3 (119), d'un paquet MSRP comprenant le contenu multimédia précoce SIP,
- la création (261), par la MF3/DF3 (119), d'un paquet HI3 comprenant le paquet MSRP créé, et dans lequel :
- la transmission (209, 321) du contenu multimédia précoce SIP par la MF3/DF3 (119) au LEA (117) comprend une transmission du paquet HI3 créé.

7. Procédé selon la revendication 6, dépendant de l'une quelconque des revendications 3 à 5, dans lequel la création (259) du paquet MSRP comprend l'inclusion de tout contenu multimédia précoce obtenu à partir du contenu CPIM stocké (231).

8. Procédé selon la revendication 7, dans lequel la création (259) du paquet MSRP comprend l'inclusion de l'une quelconque des descriptions de support SDP m, c et a et l'inclusion d'une identité de session.

9. Procédé selon l'une quelconque des revendications 6 à 8, dans lequel :
- le paquet HI3 comprend des informations qui spécifient que le contenu multimédia précoce SIP provient d'un message SIP.

10. Procédé selon la revendication 9, dans lequel :
- le paquet HI3 comprend des informations qui spécifient que le paquet MSRP est créé par la MF3/DF3.

11. Système informatique (400) d'un système de communication (100), le système informatique (400) étant configuré pour communiquer avec un organisme d'application de la loi (117) et un point d'accès d'interception et comprend une fonction de médiation et de livraison pour des informations liées à une interception, MF2/DF2 (118), une fonction de médiation et de livraison pour un contenu d'appel, MF3/DF3 (119), et une pluralité de serveurs lames (411), chaque serveur lame (411) comprenant un processeur (402) et une mémoire (404), ladite mémoire (404) contenant des instructions exécutables par ledit processeur (402) de telle manière que ledit système informatique (400) soit fonctionnel pour réaliser un procédé selon l'une quelconque des revendications 1 à 10.

12. Programme informatique (443) comprenant des instructions qui, lorsqu'elles sont exécutées sur au moins un processeur (402) dans un serveur lame (411) dans un système informatique (400) d'un système de communication (100), dans lequel le système informatique (400) est configuré pour communiquer avec un organisme d'application de la loi (117) et un point d'accès d'interception et comprend une fonction de médiation et de livraison pour des informations liées à une interception, MF2/DF2 (118), et une fonction de médiation et de livraison pour un contenu d'appel, MF3/DF3 (119), amènent le système informatique (400) à réaliser le procédé selon l'une quelconque des revendications 1 à 10.

13. Support (442), comprenant le programme informatique selon la revendication 12, dans lequel le support est l'un parmi un signal électronique, un signal optique, un signal radio et un support de stockage lisible par ordinateur.
